# EUROPÄISCHE PATENTANMELDUNG

(11) **EP 4 711 629 A1**
(43) Veröffentlichungstag der Anmeldung: **18.03.2026**
(21) Anmeldenummer: 24200514.8
(22) Anmeldetag: 16.09.2024
(51) Int. Cl.: F15B 11/20, A01B 63/10, E02F 3/627

(54) **ANORDNUNG ZUM BETREIBEN EINES HYDRAULISCHEN STEUERVENTILS FÜR EINEN LANDWIRTSCHAFTLICHEN TRAKTOR**

(71) Anmelder: Deere & Company, Moline, IL 61265 (US)
(72) Erfinder: BILLICH, MANUEL, 68163 Mannheim (DE); TRAUT, SEBASTIAN, 68163 Mannheim (DE)
(74) Vertreter: Dehnhardt, Florian Christopher

(57) **Zusammenfassung**

Eine Anordnung (10) zum Betreiben eines hydraulischen Steuerventils (12) für einen landwirtschaftlichen Traktor umfasst ein hydraulisches Steuerventil (12), das einen abhängig von einem Bedienbefehl wahlweise als Zu- oder Rücklauf für Hydraulikflüssigkeit wirkenden ersten bzw. zweiten Hydraulikanschluss (14, 16) aufweist, einen ersten und zweiten Hydraulickuppler (38, 40) zum Betrieb eines daran anschließbaren hydraulischen Verbrauchers (26), sowie ein 3/2-Wegeventil (56), mittels dessen sich der erste Hydraulikanschluss (14) entweder mit einer Arbeitskammer (34, 36) eines Hydraulikzylinders (30, 32) oder dem ersten Hydraulikkuppler (38) verbinden lässt, wobei der zweite Hydraulikanschluss (16) unmittelbar mit dem zweiten Hydraulikkuppler (40) verbunden ist.

## Beschreibung

Die Erfindung betrifft eine Anordnung zum Betreiben eines hydraulischen Steuerventils für einen landwirtschaftlichen Traktor.

Landwirtschaftliche Traktoren sind üblicherweise mit einer Vielzahl hydraulischer Steuerventile bzw. SCVs (Selective Control Valves) ausgestattet, die in einem Steuerventilblock im Heck- und/oder Frontbereich des landwirtschaftlichen Traktors zusammengefasst sind und eine Versorgung unterschiedlichster hydraulischer Verbraucher ermöglichen. Die am Steuerventilblock angeschlossenen hydraulischen Verbraucher sind beispielsweise Bestandteil eines an dem landwirtschaftlichen Traktor anbringbaren Anbau- oder Zusatzgeräts und dienen dort der Ausführung von für das betreffende Anbau- oder Zusatzgerät spezifischen Betriebs- und/oder Arbeitsfunktionen. Zur Inbetriebnahme des jeweiligen hydraulischen Verbrauchers lässt sich die Ventilstellung des hydraulischen Steuerventils bedienerseitig über ein in dem landwirtschaftlichen Traktor vorgesehenes Bedienterminal einstellen.

Aus wirtschaftlichen Erwägungen oder aufgrund baulicher Einschränkungen besteht häufig der Wunsch, an ein und demselben hydraulischen Steuerventil mehr als einen hydraulischen Verbraucher zu betreiben. Dies ist beispielsweise dann der Fall, wenn neben einem als Hydraulikzylinder ausgebildeten hydraulischen Verbraucher, der der Betätigung eines Frontkrafthebers oder eines Frontladers am landwirtschaftlichen Traktor dient, zusätzlich eine hydraulische Funktion eines am landwirtschaftlichen Traktor angebrachten Anbau- oder Zusatzgeräts ausgeführt werden soll. Der zur Ausführung der hydraulischen Funktion vorgesehene hydraulische Verbraucher ist beispielsweise als Hydromotor oder hydraulischer Aktuator ausgebildet.

Um eine gleichzeitige Betätigung der beiden hydraulischen Verbraucher wie auch deren gegenseitige Beeinflussung auszuschließen, sind unterschiedliche Lösungen bekannt. Diese beruhen meist auf der Verwendung vergleichsweise komplexer, sowohl in einem Zu- wie auch Rücklauf des hydraulischen Steuerventils liegender Wegeventile, die eine selektive Wahl zwischen den beiden hydraulischen Verbrauchern zulassen, oder aber als Kompromiss eine Unterbrechung der Hydraulikverbindung zu lediglich einem der beiden hydraulischen Verbraucher ermöglichen, um den Betrieb des anderen hydraulischen Verbrauchers nicht zu beeinträchtigen. Eine weitere gängige Möglichkeit besteht darin, Zu- und Rücklauf des hydraulischen Steuerventils über ein T-Stück mit ersten und zweiten Hydraulikkupplerpaaren zu verbinden, die sich an verschiedenen Stellen des landwirtschaftlichen Traktors befinden, wobei ausschließlich der jeweils zu betreibende der beiden hydraulischen Verbraucher an einem der Hydraulikkupplerpaare angeschlossen wird. Die insofern bekannten Lösungen sind daher entweder technisch aufwändig oder unbequem in der Handhabung.

Angesichts dessen besteht ein Bedarf an einer verbesserten Möglichkeit zum Betrieb zweier unterschiedlicher hydraulischer Verbraucher an einem gemeinsamen hydraulischen Steuerventil.

Diese Aufgabe wird durch eine Anordnung zum Betreiben eines hydraulischen Steuerventils für einen landwirtschaftlichen Traktor mit den Merkmalen des Patentanspruchs 1 gelöst.

Die erfindungsgemäße Anordnung zum Betreiben eines hydraulischen Steuerventils für einen landwirtschaftlichen Traktor umfasst ein hydraulisches Steuerventil, das einen abhängig von einem Bedienbefehl wahlweise als Zu- oder Rücklauf für Hydraulikflüssigkeit wirkenden ersten bzw. zweiten Hydraulikanschluss aufweist, einen ersten und zweiten Hydraulikkuppler zum Betrieb eines daran anschließbaren hydraulischen Verbrauchers, sowie ein 3/2-Wegeventil, mittels dessen sich der erste Hydraulikanschluss entweder mit einer Arbeitskammer eines Hydraulikzylinders oder dem ersten Hydraulikkuppler verbinden lässt, wobei der zweite Hydraulikanschluss unmittelbar mit dem zweiten Hydraulikkuppler verbunden ist.

Die erfindungsgemäße Anordnung beruht auf der Beobachtung bzw. Erkenntnis, dass für den Fall, dass über ein gemeinsames hydraulisches Steuerventil zwei voneinander unabhängige hydraulische Verbraucher betrieben werden sollen, es sich bei einem der hydraulischen Verbraucher meist um einen dem landwirtschaftlichen Traktor (räumlich) zugeordneten Hydraulikzylinder handelt. Dieser ist in der Regel Bestandteil eines Frontladers zum Verstellen einer Laderschwinge bzw. eines Ladewerkzeugs (wie einer Ladeschaufel bzw. -gabel) oder eines von einem Frontkraftheber umfassten hydraulischen Hubwerks zum Heben und Senken zugehöriger Unterlenker. Unter derartigen Umständen genügt es, ein einzelnes 3/2-Wegeventil zwischen erstem Hydraulikanschluss und Arbeitskammer des Hydraulikzylinders anzuordnen, da der Hydraulikzylinder bei Unterbrechung der insoweit hergestellten Hydraulikverbindung aufgrund der in der Arbeitskammer eingeschlossenen Hydraulikflüssigkeit bewegungsmäßig blockiert ist. Der Hydraulikzylinder nimmt damit einen inaktiven Zustand ein, in dem ausschließlich eine Betätigung des zweiten hydraulischen Verbrauchers freigegeben ist.

Vorteilhafte Weiterbildungen der erfindungsgemäßen Anordnung gehen aus den Unteransprüchen hervor.

In einer ersten Ausgestaltung der erfindungsgemäßen Anordnung kann vorgesehen sein, dass der Hydraulikzylinder einfachwirkend ausgebildet ist. Dies ist üblicherweise bei Frontkrafthebern landwirtschaftlicher Traktoren der Fall, bei denen als Bestandteil eines hydraulischen Hubwerks üblicherweise zwei Hydraulikzylinder zum Heben und Senken zugehöriger Unterlenker mit parallel geschalteten Arbeitskammern vorgesehen sind.

Abweichend davon kann der Hydraulikzylinder in einer zweiten Ausgestaltung der erfindungsgemäßen Anordnung auch doppeltwirkend ausgebildet sein, wobei eine weitere Arbeitskammer des Hydraulikzylinders unmittelbar mit dem zweiten Hydraulikanschluss verbunden ist. Der doppeltwirkende Hydraulikzylinder ist zum Beispiel Bestandteil eines an dem landwirtschaftlichen Traktor angebrachten Frontladers und dient dort dem Verstellen einer Laderschwinge bzw. eines Ladewerkzeugs in Gestalt einer Ladeschaufel bzw. -gabel.

Um eine komfortable Umschaltung zwischen den beiden hydraulischen Verbrauchern über ein in einem Fahrerstand des landwirtschaftlichen Traktors befindliches Bedienterminal zu ermöglichen, kann vorgesehen sein, dass das 3/2-Wegeventil mittels eines elektromagnetischen Stellelements auf Veranlassung einer mit dem Bedienterminal in Verbindung stehenden Kontrolleinheit elektrisch betätigbar ausgebildet ist. Abweichend davon kann das 3/2-Wegeventil auch mechanisch betätigbar ausgebildet sein und Mittel zur manuellen Betätigung in Gestalt eines Bedienhebels oder dergleichen aufweisen.

Die erfindungsgemäße Anordnung zum Betreiben eines hydraulischen Steuerventils für einen landwirtschaftlichen Traktor wird im Folgenden anhand der beigefügten Zeichnungen näher erläutert. Dabei sind übereinstimmende bzw. hinsichtlich ihrer Funktion vergleichbare Komponenten mit denselben Bezugszeichen gekennzeichnet. Es zeigen:
- Fig. 1: eine erste Ausgestaltung eines schematisch veranschaulichten Ausführungsbeispiels der erfindungsgemäßen Anordnung zum Betreiben eines hydraulischen Steuerventils für einen landwirtschaftlichen Traktor, und
- Fig. 2: eine zweite Ausgestaltung eines schematisch veranschaulichten Ausführungsbeispiels der erfindungsgemäßen Anordnung zum Betreiben eines hydraulischen Steuerventils für einen landwirtschaftlichen Traktor.

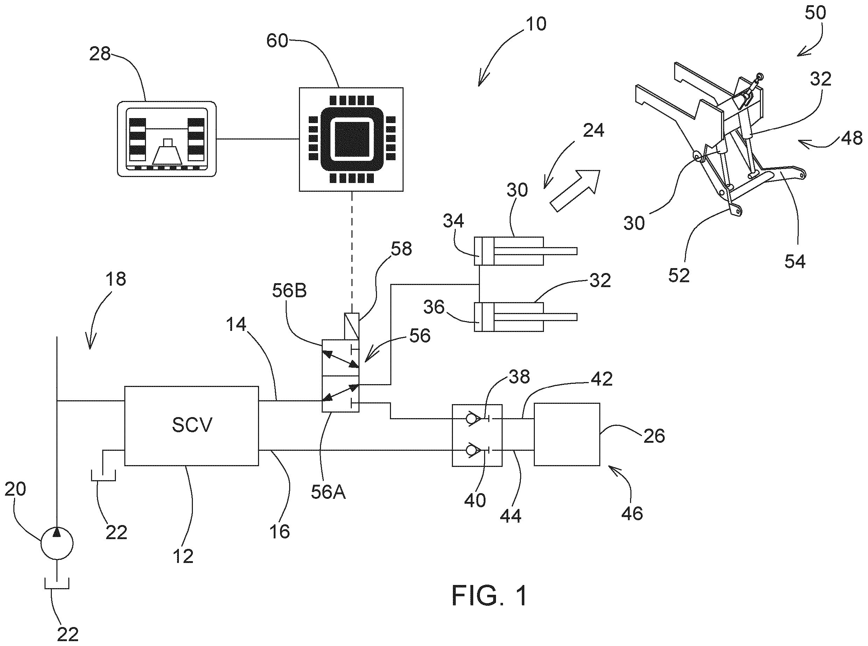

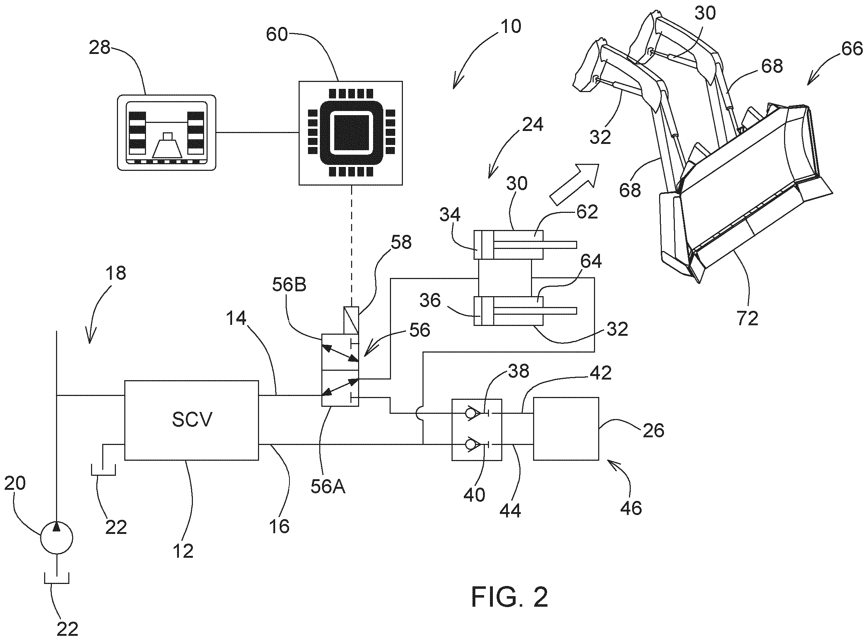

Fig. 1 und 2 zeigen unterschiedliche schematisch wiedergegebene Ausgestaltungen der erfindungsgemäßen Anordnung zum Betreiben eines hydraulischen Steuerventils für einen landwirtschaftlichen Traktor.

Die in einem (nicht explizit dargestellten) landwirtschaftlichen Traktor befindliche Anordnung 10 umfasst ein hydraulisches Steuerventil 12, das einen abhängig von einem Bedienbefehl wahlweise als Zu- oder Rücklauf für Hydraulikflüssigkeit wirkenden ersten bzw. zweiten Hydraulikanschluss 14, 16 aufweist. Das hydraulische Steuerventil 12 ist in ein Hydrauliksystem 18 des landwirtschaftlichen Traktors eingebunden, das in Fig. 1 durch eine Hochdruckpumpe 20 sowie ein Reservoir 22 für Hydraulikflüssigkeit veranschaulicht ist.

Das hydraulische Steuerventil 12 ist lediglich eines einer Vielzahl hydraulischer Steuerventile bzw. SCVs (Selective Control Valves), die in einem Steuerventilblock im Heck- und/oder Frontbereich des landwirtschaftlichen Traktors zusammengefasst sind und eine Versorgung unterschiedlichster hydraulischer Verbraucher ermöglichen (nicht gezeigt). Die am Steuerventilblock angeschlossenen hydraulischen Verbraucher sind beispielsweise Bestandteil eines an dem landwirtschaftlichen Traktor anbringbaren Anbau- oder Zusatzgeräts und dienen dort der Ausführung von für das betreffende Anbau- oder Zusatzgerät spezifischen Betriebs- und/oder Arbeitsfunktionen.

Das abgebildete hydraulische Steuerventil 12 unterscheidet sich indes von den übrigen dahingehend, dass dieses zum Betrieb voneinander unabhängiger hydraulischer Verbraucher 24, 26 herangezogen wird.

Zur Inbetriebnahme des jeweiligen hydraulischen Verbrauchers 24, 26 lässt sich die Ventilstellung des hydraulischen Steuerventils 12 bedienerseitig über ein in dem landwirtschaftlichen Traktor vorgesehenes Bedienterminal 28 einstellen.

Bei einem ersten hydraulischen Verbraucher 24 handelt es sich um dem landwirtschaftlichen Traktor (räumlich) zugeordnete erste und zweite Hydraulikzylinder 30, 32 mit parallel geschalteten ersten und zweiten Arbeits- bzw. Kolbenkammern 34, 36, ein zweiter hydraulischer Verbraucher 26 ist an einem ersten und zweiten Hydraulikkuppler 38, 40 zum Zwecke seines Betriebs anschließbar bzw. angeschlossen. Die Hydraulikkuppler 38, 40 sind als selbstverriegelnde Hydraulikbuchsen zur Aufnahme komplementärer Hydraulikstecker ausgebildet, die über jeweilige Hydraulikschläuche 42, 44 mit dem zweiten hydraulischen Verbraucher 26 in Verbindung stehen.

Beispielsgemäß dient der zweite hydraulische Verbraucher 26 zur Ausführung einer hydraulischen Funktion eines an dem landwirtschaftlichen Traktor angebrachten, hier nicht näher spezifizierten Anbau- oder Zusatzgeräts 46. Dabei ist der zweite hydraulische Verbraucher 26 typischerweise als Hydromotor oder hydraulischer Aktuator ausgebildet.

Entsprechend der in Fig. 1 wiedergegebenen ersten Ausgestaltung der Anordnung 10 ist vorgesehen, dass die beiden Hydraulikzylinder 30, 32 einfachwirkend ausgebildet sind. Vorliegend sind die Hydraulikzylinder 30, 32 Bestandteil eines hydraulischen Hubwerks 48 eines Frontkrafthebers 50 des landwirtschaftlichen Traktors und dienen dort dem Heben und Senken zugehöriger Unterlenker 52, 54. Abweichend von der Darstellung in Fig. 1 kann es sich bei den beiden Arbeitskammern 34, 36 auch anstelle von Kolbenkammern um Ringkammern der Hydraulikzylinder 30, 32 handeln. Um ein unterdruckbedingtes Ausgasen der Hydraulikflüssigkeit zu vermeiden, erfolgt die Wahl der Arbeitskammern 34, 36 derart, dass auf diese im inaktiven Zustand eine drückende Last einwirkt.

Weiterhin umfasst die Anordnung 10 ein 3/2-Wegeventil 56, mittels dessen sich der erste Hydraulikanschluss 14 entweder mit den Kolbenkammern 34, 36 der beiden Hydraulikzylinder 30, 32 oder aber mit dem ersten Hydraulikkuppler 38 verbinden lässt. Der zweite Hydraulikanschluss 16 ist hingegen unmittelbar mit dem zweiten Hydraulikkuppler 40 verbunden.

Das 3/2-Wegeventil 56 lässt sich in zwei unterschiedliche Schaltstellungen 56A und 56B verbringen. In der ersten Schaltstellung 56A (siehe Fig. 1) ist eine Hydraulikverbindung zwischen dem ersten Hydraulikanschluss 14 und den Kolbenkammern 34, 36 der beiden Hydraulikzylinder 30, 32 hergestellt, in Richtung des ersten Hydraulikkupplers 38 ist diese gesperrt. Befindet sich das 3/2-Wegeventil 56 in der zweiten Schaltstellung 56B, so ist die Hydraulikverbindung zwischen dem ersten Hydraulikanschluss 14 und den Kolbenkammern 34, 36 der beiden Hydraulikzylinder 30, 32 gesperrt, wohingegen diese in Bezug auf den ersten Hydraulikkuppler 38 freigegeben ist. In diesem Zustand sind die beiden Hydraulikzylinder 30, 32 dann (bei Unterbrechung der insoweit hergestellten Hydraulikverbindung) aufgrund der in den Kolbenkammern 34, 36 eingeschlossenen Hydraulikflüssigkeit bewegungsmäßig blockiert. Die beiden Hydraulikzylinder 30, 32 nehmen damit einen inaktiven Zustand ein, in dem ausschließlich eine Betätigung des zweiten hydraulischen Verbrauchers 26 freigegeben ist.

Um eine komfortable Wahl zwischen den beiden Schaltstellungen 56A und 56B und damit den beiden hydraulischen Verbrauchern 24, 26 über das in einem Fahrerstand des landwirtschaftlichen Traktors befindliche Bedienterminal 28 zu ermöglichen, ist vorgesehen, dass das 3/2-Wegeventil 56 mittels eines elektromagnetischen Stellelements 58 auf Veranlassung einer mit dem Bedienterminal 28 in Verbindung stehenden Kontrolleinheit 60 elektrisch betätigbar ausgebildet ist. In einer nicht dargestellten Abwandlung der Anordnung 10 kann das 3/2-Wegeventil 56 auch mechanisch betätigbar ausgebildet sein und Mittel zur manuellen Betätigung in Gestalt eines Bedienhebels oder dergleichen aufweisen.

Fig. 2 zeigt eine zweite Ausgestaltung der Anordnung 10, die insofern eine Abwandlung der in Fig. 1 wiedergegebenen ersten Ausgestaltung darstellt, als die beiden Hydraulikzylinder 30, 32 doppeltwirkend ausgebildet sind. Die Hydraulikzylinder 30, 32 weisen parallel geschaltete erste und zweite weitere Arbeitskammern bzw. Ringkammern 62, 64 auf, die unmittelbar mit dem zweiten Hydraulikanschluss 16 verbunden sind. Die Hydraulikzylinder 30, 32 sind vorliegend Bestandteil eines an dem landwirtschaftlichen Traktor angebrachten Frontladers 66 und dient dort dem Verstellen einer Laderschwinge 68 oder alternativ auch eines Ladewerkzeugs 70 in Gestalt einer Ladeschaufel 72.

Ergänzend sei angemerkt, dass die Darstellung von jeweils zwei Hydraulikzylindern 30, 32 wie auch die beschriebene Verwendung in einem Frontkraftheber 50 bzw. Frontlader 66 lediglich beispielhaft zu verstehen ist. Vielmehr kann es sich auch um eine beliebige andere Anzahl bzw. Verwendung handeln.

Auch kann eine abweichende Verschaltung der beiden Hydraulikzylinder 30, 32 vorgesehen sein, bei der die Arbeitskammern 34, 36 als Ringkammern und die weiteren Arbeitskammern 62, 64 als Kolbenkammern ausgebildet sind. Eine solche Verschaltung ist zu wählen, wenn im inaktiven Zustand auf die Hydraulikzylinder 30, 32 eine ziehende Last einwirkt (siehe hierzu auch die vorstehende Anmerkung im Zusammenhang mit der Verwendung einfachwirkender Hydraulikzylinder 30, 32).

## Patentansprüche

1. Anordnung zum Betreiben eines hydraulischen Steuerventils für einen landwirtschaftlichen Traktor, umfassend ein hydraulisches Steuerventil (12), das einen abhängig von einem Bedienbefehl wahlweise als Zu- oder Rücklauf für Hydraulikflüssigkeit wirkenden ersten bzw. zweiten Hydraulikanschluss (14, 16) aufweist, einen ersten und zweiten Hydraulikkuppler (38, 40) zum Betrieb eines daran anschließbaren hydraulischen Verbrauchers (26), sowie ein 3/2-Wegeventil (56), mittels dessen sich der erste Hydraulikanschluss (14) entweder mit einer Arbeitskammer (34, 36) eines Hydraulikzylinders (30, 32) oder dem ersten Hydraulikkuppler (38) verbinden lässt, wobei der zweite Hydraulikanschluss (16) unmittelbar mit dem zweiten Hydraulikkuppler (40) verbunden ist.

2. Anordnung nach Anspruch 1, **dadurch gekennzeichnet, dass** der Hydraulikzylinder (30, 32) einfachwirkend ausgebildet ist.

3. Anordnung nach Anspruch 1, **dadurch gekennzeichnet, dass** der Hydraulikzylinder (30, 32) doppeltwirkend ausgebildet ist, wobei eine weitere Arbeitskammer (62, 64) des Hydraulikzylinders (30, 32) unmittelbar mit dem zweiten Hydraulikanschluss (16) verbunden ist.

4. Anordnung nach wenigstens einem der vorhergehenden Ansprüche, **dadurch gekennzeichnet, dass** das 3/2-Wegeventil (56) elektrisch oder mechanisch betätigbar ausgebildet ist.

5. Landwirtschaftlicher Traktor mit einer Anordnung nach wenigstens einem der vorhergehenden Ansprüche, **dadurch gekennzeichnet, dass** der Hydraulikzylinder (30, 32) Bestandteil eines hydraulischen Hubwerks (48) eines Frontkrafthebers (50) oder eines Frontladers (66) des landwirtschaftlichen Traktors ist.
